# EUROPEAN PATENT APPLICATION

(11) **EP 2 597 627 A2**
(43) Date of publication of application: **29.05.2013**
(21) Application number: 11809886.2
(22) Date of filing: 21.07.2011
(51) Int. Cl.: G07D 1/04, G06K 17/00

(54) **CURRENCY/CASINO-CHIP EXCHANGE SYSTEM, AND PIT BOX COMPRISING SAME**

(30) Priority: 23.07.2010 KR 20100071576
(71) Applicant: System Integration Technology Korea Co., Ltd, Incheon 406-840 (KR)
(72) Inventor: LEE, Sung Won, Incheon 406-130 (KR)
(74) Representative: Lippert, Stachow & Partner
(86) International application number: PCT/KR2011/005392
(87) International publication number: WO 2012/011759

(57) **Abstract**

A casino chip exchange system includes a counterfeit detection counter configured to count and sum monies inserted by a casino insider and detect the presence of counterfeit money; a money storage part configured to store monies which have passed through the counterfeit detection counter; a chip identification part disposed on a casino table; a chip identification device configured to count and sum a plurality of casino chips placed on the chip identification part and detect the presence of a counterfeit casino chips; a control unit connected with the counterfeit detection counter and the chip identification device and configured to check whether a summed amount of monies calculated by the counterfeit detection counter corresponds to a summed amount of casino chips calculated by the chip identification device; and an output unit connected with the control unit.

## Description

### BACKGROUND OF THE INVENTION

The present invention relates to a casino chip exchange system. More particularly, the present invention relates to a casino chip exchange system which includes a counterfeit detection counter capable of counting monies and checking whether the monies are counterfeited or not; a chip identification device capable of counting casino chips and checking whether or not the casino chips are counterfeited or not; and a control unit connected with the counterfeit detection counter and the chip identification device and configured to check whether or not a summed amount of monies corresponds to a summed amount of casino chips, and a pit box including the same.

A casino is a place where customers may enjoy tables game such as poker and games using machines such as slot machines. In general, in a casino, casino chips are used together with monies, and therefore, players frequently exchange monies and casino chips for each other. In the present specification, it is to be noted that exchange does not mean exchange of monies having different values but is an exchange of monies for casino chips or exchange of casino chips for monies.

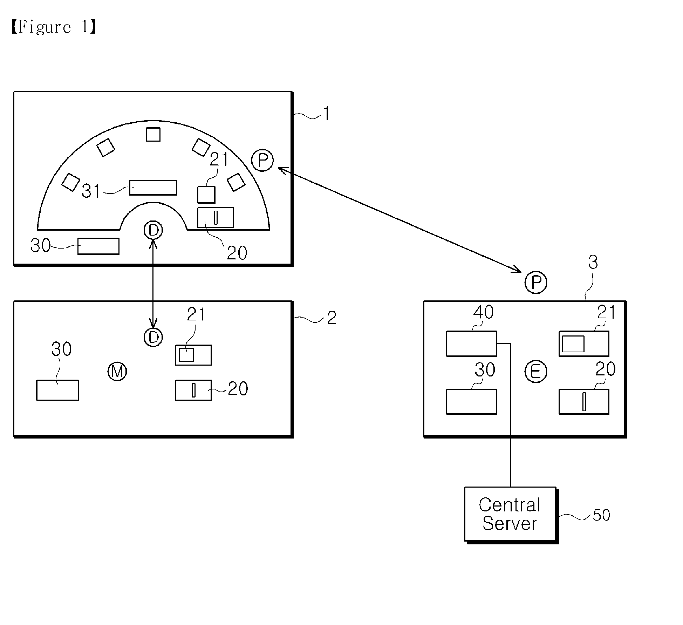

A conventional exchange method will be described below with reference to FIG. 1.

In general, a player P conducts an exchange directly in a table play area 1 where a game is played or in an exchange area 3 as a separate place only for exchange. In most casinos, a number of exchange areas 3 are labeled in the name of "casher". The exchange area 3 where monies and casino chips with high values are stored is a place with enhanced security so that the player P and unconcerned staff members cannot have access to the area. The player P may exchange monies or casino chips with a staff member E working in the exchange area 3 through a provided window.

When exchange is conducted in the exchange area 3, the staffer member E working in the exchange area 3 receives monies from the player P, checks the presence of counterfeit by using a counterfeit detector 21, counts and sums the monies by using a counter in the case where no counterfeit is found, inserts the monies into a drop box 20, takes out the casino chips corresponding to the summed amount of the monies from a casino chip storage box 30, and transfers the taken-out casino chips to the player P.

A control unit 40 acting similarly as a computer is connected with a central server 50 in the exchange area 3. The control unit 40 transmits exchange information including the summed amount of the monies inputted from the staff member E working in the exchange area 3, to the central server 50. The exchange information may be used for accounting by an ERP (enterprise resource system).

In the case where an exchange is conducted in the table play area 1, in the same manner as described above, a dealer D receives monies from a player P, checks the presence of counterfeit by using a counterfeit detector 21, counts and sums the monies in the case where no counterfeit is detected, and inserts the monies into a drop box 20. In general, the drop box 20 is positioned under a table not to be seen by the player P. The dealer then D takes out the casino chips corresponding to the summed amount of the monies from a casino chip storage box 30 or a chip tray 31 positioned on the table, and transfers the casino chips to the player P.

In the case where a player P wants to conduct an exchange in the table play area 1, if the amount of monies or casino chips to be exchanged is large or is a business policy of the casino, a manager M who supervises the dealer D rather than the dealer D may directly conduct exchange. The manager M conducts an exchange in a manager area 2. It is the norm that a manager area 2 is provided in each table play areas 1.

The dealer D who receives monies from a player P carries the monies to the manager area 2. The manager M then checks whether counterfeit is present, by using a counterfeit detector 21, counts and sums the monies where no counterfeit is detected, and inserts the monies into a drop box 20. Thereafter, the manager M takes out casino chips corresponding to the summed amount of the monies from a casino chip storage box 30, and transfers the taken-out casino chips to the dealer D. The dealer D brings the casino chips to the table play area 1 and transfers the casino chips to the player P.

Since an exchange is not the main job of the dealer D or the manager M unlike the staff member E working in the exchange area 3, it is the norm that exchange information such as the summed amount of monies is not inputted to the control unit 40 or the central server 50. Instead, the drop box 20 is periodically or nonperiodically moved to a central control room in conformity with a predetermined standard, and a separate staff member counts the monies in the drop box 20 and settles an account.

As described above, an exchange for exchanging monies for casino chips is conducted in the table play area 1, the manager area 2 and the exchange area 3. However, it is the norm that an exchange for exchanging casino chips for monies is conducted in the exchange area 3.

In the conventional exchange method as described above, the following problems are likely to occur. Hereafter, an employee such as the dealer D, the manager M and the staff member E working in the exchange area 3 will be called an insider.

First, an accident is likely to occur due to the use of a counterfeit. While the presence of a counterfeit may be detected by the counterfeit detector 21, in the case where the insider is negligent in their duties or in the case where a customer who uses a counterfeit and an insider conspire with each other and the insider exchanges the counterfeit with casino chips, an accident is likely to.

Second, an accident is likely to occur due to the use of a counterfeit casino chip. Since casino chips may be counterfeited relatively easy compared to monies which include various counterfeit prevention means, and since casino chips are frequently dealt in a casino, it is difficult to find the user of the counterfeit casino chip once the casino chip is used.

Third, an accident is likely to occur due to improper conduct of an insider. Considering that exchanges are frequently conducted in a casino, cheating techniques are becoming sophisticated day by day, for example, a staff member does not store all the monies received in the course of the exchange in a drop box and hides a portion of the monies or a staff member who conspires with a customer may dispense casino chips more than the amount to be dispensed.

Monies and casino chips hold high value and are used in a casino, and therefore the seriousness of an accident occurring is substantial, and a single accident may cause a significant monetary loss.

### SUMMARY OF THE INVENTION

An embodiment of the present invention is directed to a novel casino chip exchange system capable of overcoming the problems of the conventional casino chip exchange system.

Another embodiment of the present invention is directed to a novel casino chip exchange system which can record and display in real time an amount of money to be exchanged and verify whether the exchange is precisely carried out, so that the use of a counterfeit bill, the use of a counterfeit casino chip or the occurrence of cheating by a staff member is prevented.

Another embodiment of the present invention is directed to a novel casino chip exchange system which can record and display in real time the revenue of a casino so that precise and quick accounting is ensured.

In order to achieve the above objects, in accordance with an embodiment of the present invention, there is provided a casino chip exchange system including: a counterfeit detection counter configured to count and sum monies and detect presence of counterfeit money; a chip identification device configured to count and sum casino chips and detect presence of counterfeit casino chips; and a control unit connected with the counterfeit detection counter and the chip identification device, wherein the control unit is able to check whether a summed amount of monies corresponds to a summed amount of casino chips.

Preferably, the casino chip exchange system may further include a money storage part configured to store monies which have passed through the counterfeit detection counter.

Preferably, a counterfeit rejection part may be disposed between the counterfeit detection counter and the money storage part, and the money storage part may include a security unit.

Preferably, the casino chip exchange system may further include a chip identification part, and the chip identification device may be able to count and sum casino chips placed on the chip identification part and detect presence of a counterfeit casino chip.

Preferably, the chip identification device may include an antenna and an RFID reader.

Preferably, the casino chip exchange system may further include an output unit, and the output unit may be configured to output whether or not the summed amount of monies corresponds to the summed amount of casino chips.

Preferably, the casino chip exchange system may further include an auxiliary output unit connected with the control unit, and the auxiliary output unit may be configured to output the summed amount of monies or the summed amount of casino chips.

Preferably, the control unit may be able to apply information of the summed amount of monies to a central server.

Preferably, the casino chip exchange system may further include a money dispenser connected with the control unit.

In order to achieve the above objects, in accordance with another embodiment of the present invention, there is provided a pit box including the casino chip exchange system, wherein the counterfeit detection counter, the money storage part and the control unit are disposed in the pit box, and wherein the money storage part is detachable from the pit box.

### BRIEF DESCRIPTION OF THE DRAWINGS

FIG. 1 is a schematic view illustrating a conventional casino chip exchange system.

FIG. 2 is a schematic view illustrating a casino chip exchange system in accordance with an embodiment of the present invention.

FIG. 3 is a perspective view illustrating a pit box to which the casino chip exchange system according to the present invention is applied.

FIG. 4 is a cross-sectional view of the pit box shown in FIG. 3.

FIGs. 5a to 5c are schematic views showing exemplary embodiments in which the casino chip exchange system according to the present invention is applied.

### DESCRIPTION OF SPECIFIC EMBODIMENTS

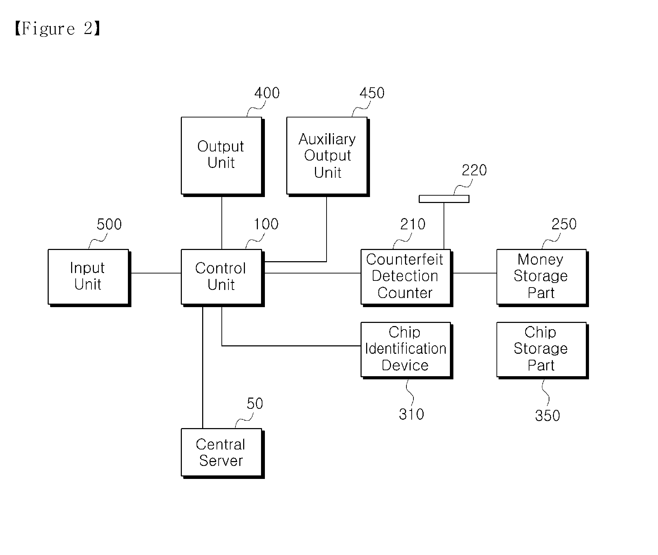

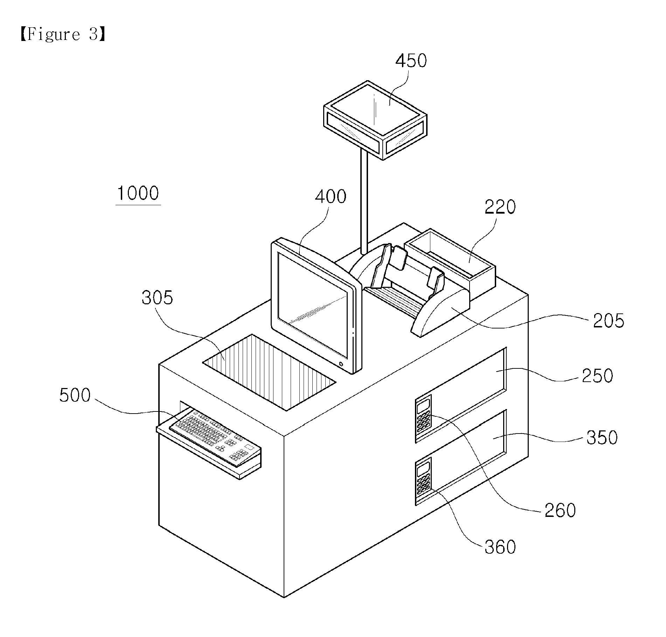

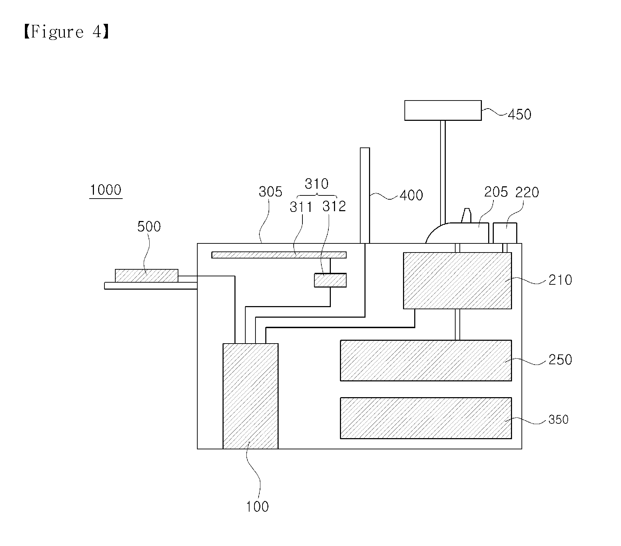

A casino chip exchange system and principles thereof will be described below with reference to the accompanying drawings. FIG. 2 is a schematic view illustrating a casino chip exchange system in accordance with an embodiment of the present invention, and FIGs. 3 and 4 illustrate a pit box to which the casino chip exchange system according to the present invention is applied.

**1. Explanation of a casino chip exchange system and a pit box including the same**

A casino chip exchange system in accordance with an embodiment of the present invention includes a counterfeit detection counter 210, a money storage part 250 for storing monies checked as not being counterfeits, a chip storage part 350 for storing casino chips, a chip identification device 310 capable of checking whether casino chips are counterfeited or not, a control unit 100 electrically connected with these components, an input unit 500 for inputting information to the control unit 100, and an output unit 400 for outputting information.

If a user inserts monies through a money insertion opening 205, the counterfeit detection counter 210 installed in connection with the money insertion opening 205 checks whether counterfeit money is present and counts and sums the monies.

If a counterfeit money is present, the corresponding counterfeit money is not transferred to the money storage part 250 and is rejected to the user by a counterfeit rejection part 220, and at the same time, the control unit 100 notifies this situation through the output unit 400 or a separate alarm device. It is to be noted that all devices, such as an alarm lamp, for visually transferring an alarm message to the user, may also be included in the output unit 400.

As to the method for rejecting the counterfeit, any methods generally known in the art may be used. In general, the counterfeit detection counter 210 includes a temporary storage part (not shown) such that the inserted money which has undergone the counterfeit detection and counting can be temporarily stored in the temporary storage part. In this process, if it is determined that money is detected as counterfeit, the counterfeit rejection part 220 rejects the counterfeit money to the user. That is to say, when the user inserts a counterfeit through the money insertion opening 205, the counterfeit is not transferred to the money storage part 250.

In an exemplary embodiment, when the counterfeit detection counter 210 detects the insertion of a counterfeit, the counterfeit rejection part 220 may reject the counterfeit to a separate rejection area.

On the contrary, when it is determined that the inserted monies are genuine, the monies are stored in the money storage part 250.

Meanwhile, the summed amount of monies counted by the counterfeit detection counter 210 is outputted from the output unit 400 under the control of the control unit 100.

Counterfeit detection and counting and summing of monies may be performed according to any one of the methods generally known in the art. While a counterfeit detector using a UV lamp may be generally used according to the conventional art, it is to be noted that the present invention is not limited to such.

Since counterfeits are rejected, only genuine monies are stored in the money storage part 250. The user may decouple the money storage part 250 from a pit box 1000 and transfer the money storage part 250 to a central control room (not shown). In other words, the money storage part 250 may serve as the conventional drop box described above with reference to FIG. 1. To this end, the money storage part 250 may be detachably disposed in the pit box 1000.

It is preferred that a security unit 260 be installed on the money storage part 250. The security unit 260 may perform two functions. First, the security unit 260 may perform a security function when decoupling the money storage part 250 from the pit box 1000 in the case where the money storage part 250 is detachably disposed in the pit box 1000. Second, the security unit 260 may perform a security function when opening the money storage part 250. Due to these facts, it is possible to allow only an authorized staff member to decouple the money storage part 250 from the pit box 1000 and to open the money storage part 250 and deal the monies stored in the money storage part 250. It is preferred that the security unit 260 be linked with the control unit 100. Through this, it is possible to monitor in real time whether the money storage part 250 is attached to or detached from the pit box 1000 and whether the money storage part 250 is opened or closed.

The money storage part 250 may include a plurality of cassettes which are divided by the value of the monies. In other words, the monies, which have passed through the counterfeit detection counter 210, may be classified by the value of monies by means of separate modules provided in the money storage part 250 and may be stored in the plurality of cassettes provided in the money storage part 250. A method, in which monies are classified by the value of monies, and a method, in which the plurality of cassettes are divided by the value of monies, may be realized according to technologies which are generally known in the art. Such an exemplary embodiment, in which the money storage part 250 includes a plurality of cassettes divided by the value of monies, is particularly preferred when considering a case that monies are dispensed through a money dispenser (not shown) which will be described later.

Casino chips are stored in the chip storage part 350. It is conceivable that a separate chip identification device may be disposed in the chip storage part 350 such that the value of the casino chips stored in the chip storage part 350 may be checked in real time.

In the event that the exchange system according to the embodiment of the present invention is used in an exchange area 3 (see FIG. 1), a user such as a staff member E who works in the exchange area 3 may take out casino chips from the chip storage part 350 or a separate storage part and transfer the taken-out casino chips to a customer who wants exchange.

In the event that the exchange system according to the embodiment of the present invention is used in a table play area 1 (see FIG. 1), a user such as a dealer D may take out casino chips from a chip tray 31, the chip storage part 350 or a separate storage part and transfer the taken-out casino chips to a customer who wants exchange. In general, a method of taking out casino chips from a chip tray 31 may be used. In this case, the chip storage part 350 may be used as a temporary storage part for supplying casino chips to the chip tray 31.

The user confirms the summed amount of monies that is outputted through the output unit 400, takes out casino chips corresponding to the summed amount of monies from the chip tray 31 or the chip storage part 350, and transfers the taken-out casino chips to a customer.

In this process, the user places the casino chips on a chip identification part 305 before transferring the casino chips to the customer. The chip identification device 310 may be disposed under the chip identification part 305 and may check whether or not the plurality of casino chips placed on the chip identification part 305 have a summed amount accurately corresponding to the summed amount of monies to be exchanged and whether or not a counterfeit casino chip is present.

In an exemplary embodiment, each casino chip may include an RFID tag which has value information and security information, and the chip identification device 310 may include an antenna 311 and a reader 312 (see FIG. 4).

In another exemplary embodiment, casino chips may be classified in terms of value thereof by their colors, and the chip identification device 310 may include a color sensor.

Besides, the printings printed with constituents capable of being sensed by ultraviolet or infrared rays or MG or MICR markings may be added to casino chips, and the chip identification device 310 may include a sensor for sensing the constituents or the markings. It is to be noted that any methods for distinguishing casino chips may be used.

In this way, the control unit 100 counts the casino chips placed on the chip identification part 305 and checks whether or not the casino chips are counterfeited, and outputs results through the output unit 400.

Further, the control unit 100 checks whether or not the summed amount of the casino chips corresponds to the summed amount of the monies counted through the counterfeit detection counter 210, and allows the user to confirm a checking result through the output unit 400. Through this, it is possible to provide casino chips by an amount accurately corresponding to the summed amount of monies to be exchanged. After confirming that the summed amount of the casino chips placed on the chip identification part 305 corresponds to the summed amount of monies, the user may transfer the casino chips to the customer.

In an exemplary embodiment, the casino chip exchange system according to the present invention may further include an auxiliary output unit 450 for outputting the summed amount of monies to be exchanged. Unlike the output unit 400 for outputting the summed amount of monies to be exchanged mainly toward the user, the auxiliary output unit 450 may output the summed amount of monies to be exchanged toward the customer who wants an exchange and a CCTV which is mounted to the ceiling or the side wall of a casino. Due to this fact, since the customer who wants the exchange may confirm the summed amount of monies through the auxiliary output unit 450, user convenience may be improved, and since the CCTV may record the summed amount of monies outputted through the auxiliary output unit 450, security may be improved.

It is sufficient for the auxiliary output unit 450 to be capable of outputting the summed amount of monies toward the customer wanting the exchange and toward the CCTV. In the embodiment shown in FIGs. 3 and 4, the auxiliary output unit 450 includes output panels for customers, which are positioned on the side surfaces of the auxiliary output unit 450, and an output panel for a CCTV, which is positioned on the upper surface of the auxiliary output unit 450. In the case where a tetrahedron shape is employed, the auxiliary output unit 450 includes a total of five output panels which are positioned on four side surfaces and one upper surface.

The chip storage part 350 is detachably disposed in the pit box 1000 so as to permit insertion and removal of casino chips into and from it, and it is preferred that a separate security unit 360 be installed on the chip storage part 350.

The output unit 400 outputs the information applied to the control unit 100 as described above, to the user. The information outputted by the output unit 400 includes whether counterfeit is present, the summed amount of monies, the summed amount of casino chips, whether the summed amount of monies to be exchanged corresponds to the summed amount of casino chips, etc. While examples of the output unit 400 may include a monitor, any device capable of outputting information may be used. As described above, the output unit 400 may include an alarm lamp.

The input unit 500 is used when it is necessary to input information to the system, such as upon starting or ending the system or inputting a user ID to the system. While examples of the input unit 500 may include a keyboard and/or a mouse, any devices capable of inputting information may be used.

In an exemplary embodiment, a touch screen, in which the output unit 400 and the input unit 500 are integrated with each other, may be used.

The control unit 100 may be applied with information from the counterfeit detection counter 210 and the chip identification device 310 and may transfer the information to a central server 50. While examples of the control unit 100 may include an operation device such as a computer, any devices capable of operating information may be used.

It is preferred that not only the control unit 100, the output unit 400 and the input unit 500 but also the counterfeit detection counter 210, the money storage part 250 and the chip identification device 310 be disposed in the pit box 1000 in view of the fact that the pit box 1000 may be easily moved and controlled.

Meanwhile, it is preferred that the exchange system according to the present invention further include a money dispenser (not shown) connected with the control unit 100 for the case where casino chips are exchanged for monies in the exchange area 3.

That is to say, if the user places casino chips to be exchanged on the chip identification part 305, the control unit 100 recognizes the summed amount of the casino chips placed on the chip identification part 305 and causes monies corresponding to the summed amount of the casino chips to be automatically dispensed from the money dispenser. This is enabling because the control unit 100 can check whether the summed amount of casino chips corresponds to the summed amount of monies, as described above.

At the same time, the control unit 100 may output the summed amount of monies and the summed amount of casino chips through the output unit 400, and similarly, may be applied with information from the money dispenser and the chip identification device 310 and transfer the information to the central server 50.

In an exemplary embodiment, the money dispenser may be integrated with the counterfeit detection counter 210. For example, a conventional apparatus such as an ATM (automatic teller machine), which is capable of simultaneously performing counterfeit detection, counting and dispensing, may be used. The control unit 100 may allow only monies corresponding to the summed amount of casino chips to be automatically dispensed to the user through the money dispenser.

In another exemplary embodiment, the money dispenser may be provided separately from the counterfeit detection counter 210. In other words, it may be sufficient for the money dispenser to dispense monies corresponding to the summed amount of casino chips to the user under the control of the control unit 100. Therefore, it is to be noted that the money dispenser may be provided both in an integration type and in a separation type.

Meanwhile, it may be envisaged that information such as the summed amount of monies and/or the summed amount of casino chips is transmitted to the central server 50 which is connected with the control unit 100, such that the central server 50 may be linked with, for example, an accounting system such as an existing ERP (enterprise resource system).

The central server 50 may accurately figure out in real time the summed amounts of inputted and outputted monies, the summed amounts of inputted and outputted casino chips, and the amounts of the monies stored in a plurality of money storage parts 250 used in a casino, every time when an exchange occurs. Therefore, as the central server 50 is linked with the accounting system, advantages are provided in that accounting may be precisely conducted in real time.

**2. Explanation of a method for installing the casino chip exchange system in a casino**

The casino chip exchange system according to the present invention may not be necessarily provided in the shape of the pit box 1000. That is to say, it is sufficient that the casino chip exchange system includes the money storage part 250 connected with the counterfeit detection counter 210, the chip identification part 305 connected with the chip identification device 310, the controller 100 capable of receiving information from the money storage part 250 and the chip identification device 310, and the output unit 400 and the input unit 500 connected with the controller 100. For example, in the case of the exchange area 3 shown in FIG. 1, the shape of the pit box 1000 is not necessarily needed.

In the case where the casino chip exchange system according to the present invention is provided in the shape of the pit box 1000 with the above-described components disposed therein, advantages may be provided in that movement is easy and the casino chip exchange system can be directly applied to an existing table.

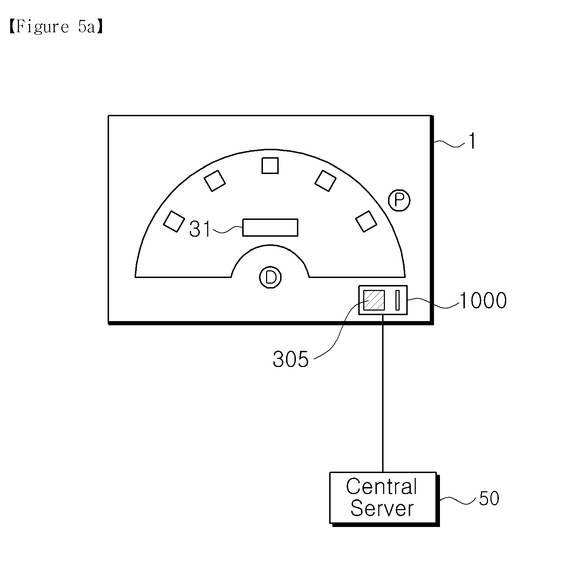

FIGs. 5a to 5c show exemplary embodiments in which the pit box 1000 according to the present invention is positioned in a table play area 1.

In the exemplary embodiment shown in FIG. 5a, the integrated type pit box 1000 shown in FIGs. 3 and 4 is applied to an existing table play area 1. In this case, as can be seen from the drawing, it is not necessary to replace or modify a table which is used, and thus, separate installation costs are not required.

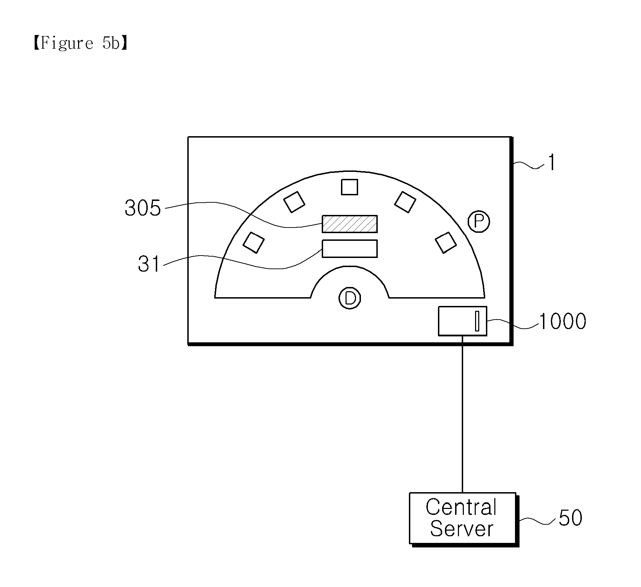

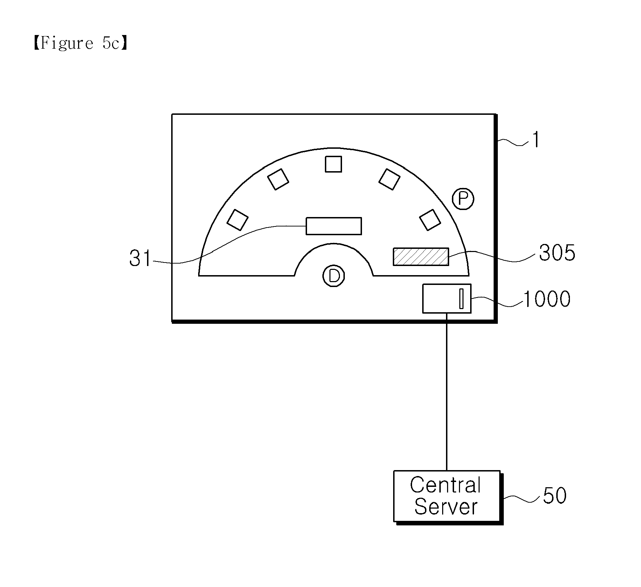

In the exemplary embodiments shown in FIGs. 5b and 5c, the chip identification part 305 and the chip identification device 310 of the pit box 1000 shown in FIGs. 3 and 4 are applied to an existing table, and the remaining components are integrally disposed in the pit box 1000.

In general, during exchange, a dealer D proves, in front of a player P, that is, on a table, that the summed amount of exchanged casino chips is accurate. This process is to prove, to the player P, that an exchange has been accurately conducted and to ensure that an exchange is recorded by a security camera such as a CCTV for photographing the table.

From this viewpoint, in the exemplary embodiments shown in FIGs. 5b and 5c, it may be advantageous to install the chip identification part 305 on a table. However, in this case, it is necessary to install the chip identification device 310 under the existing table or to newly fabricate a table.

**3. Explanation of an exchange method**

**(1) The case of exchanging money into casino chips**

A player P transfers monies to a dealer D in a table play area 1 or to a staff member E in an exchange area 3.

A user inserts the monies through the money insertion opening 205 into the counterfeit detection counter 210.

The counterfeit detection counter 210 performs counterfeit detecting and counting operations for all monies and then stores the monies in the temporary storage part (not shown).

In this process, if counterfeit is detected among the inserted monies, the corresponding counterfeit is rejected by the counterfeit rejection part 220, and only genuine monies are stored in the temporary storage part. The counterfeit detection counter 210 counts and sums these genuine monies. The control unit 100 can recognize the presence of counterfeit and alarm a corresponding situation through the output unit 400.

The counterfeit detection counter 210 outputs the summed amount of the genuine monies through the output unit 400 under the control of the control unit 100 and at the same time transmits the summed amount of the genuine monies to the central server 50. The corresponding genuine monies are automatically stored in the money storage part 250.

In an exemplary embodiment, the summed amount of the monies may be additionally outputted to a customer wanting the exchange, to the user and to the CCTV, through the auxiliary output unit 450.

After the user confirms the summed amount of the counted monies, the user takes out corresponding casino chips from the chip tray 31, the chip storage part 350 or a separate storage part. As the user places the taken-out casino chips on the chip identification part 305, the chip identification device 310 counts and sums the casino chips. The summed amount of the casino chips is outputted to the user through the output unit 400 under the control of the control unit 100, and at the same time is transmitted to the central server 50.

The control unit 100 outputs information regarding whether or not the summed amount of the monies and the summed amount of the casino chips correspond to each other, through the output unit 400. In the case where both amounts correspond to each other, the user confirms this situation and transfers the taken-out casino chips to the player P.

**(2) The case of exchanging casino chips into money**

A player P transfers casino chips to a user such as a staff member E working in an exchange area 3.

The user places the casino chips on the chip identification part 305.

If counterfeit is detected from at least any one of the placed casino chips, the control unit 100 recognizes the detection of counterfeit and alarms a corresponding situation through the output unit 400.

If all casino chips are genuine, the chip identification device 310 counts and sums the casino chips. The summed amount of the casino chips is outputted to the user through the output unit 400 under the control of the control unit 100, and at the same time is transmitted to the central server 50.

In an exemplary embodiment, the summed amount of the casino chips may be additionally outputted to the customer wanting the exchange, to the user and to the CCTV, through the auxiliary output unit 450.

After the user confirms the summed amount of the casino chips, the user stores the casino chips in the chip storage part 350. At the same time, the control unit 100 takes out monies corresponding to the summed amount of the casino chips through the money dispenser (not shown), and automatically transmits information regarding the summed amount of the withdrawn monies and the fact that a withdrawal of monies was made, to the central server 50.

Then, the user transfers the monies to the player P.

**4. Explanation of principles for preventing the occurrence of cheating by the casino chip exchange system according to the present invention**

Cheating that is likely to occur in the aforementioned conventional casino chip exchange system may be prevented in the following ways.

First, it is possible to prevent an accident from occurring when a player using counterfeits and a staff member conspire with each other and the staff member exchanges the counterfeits for monies. In the case where the system according to the present invention is applied, as the counterfeit detection counter 210 immediately detects the presence of counterfeit, the counterfeit cannot be stored in the money storage part 250, and the detection of the counterfeit is recorded and displayed on the output unit 400, by which the occurrence of an accident is prevented.

Second, it is possible to prevent the occurrence of an accident when a counterfeit casino chip is used. In the case where the system according to the present invention is applied, a counterfeit casino chip is filtered by the chip identification device 310 on the chip identification part 305, by which the presence of an counterfeit casino chip is immediately detected.

Third, it is possible to prevent the occurrence of an accident when a staff member does not store all the monies received in the course of exchange in a drop box and hides a portion of the monies or that a staff member and a customer conspire with each other and the staff member dispenses casino chips more than to be dispensed. In the case where the system according to the present invention is applied, since all the monies having passed through the counterfeit detection counter 210 are stored in the money storage part 250 and the summed amount of the monies is inputted to the central server 50, it is possible to prevent the occurrence of an accident due to the former case, and since casino chips corresponding to the summed amount of money to be exchanged are accurately dispensed by the chip identification device 310, it is possible to prevent the occurrence of an accident due to the latter case.

As is apparent from the above descriptions, the casino chip exchange system according to the present invention provides advantages in that it is possible to prevent or immediately detect the use of a counterfeit bill or a counterfeit casino chip and to avoid the occurrence of an accident due to cheating by a staff member.

Also, since a pit box including the casino chip exchange system according to the present invention can be added as it is to a game table which has been already used, separate installation costs are not required to apply the system.

Further, since a summed amount of monies to be exchanged, that is, a summed amount of monies to be stored is counted and reported in real time by the casino chip exchange system according to the present invention, an accounting system may be backed up. Moreover, because the pit box can be connected with an existing server, the present invention may be applied to an existing accounting system as it is.

Furthermore, since the customer wanting the exchange may confirm the summed amount of monies through the auxiliary output unit, user convenience may be improved, and since the CCTV may record the summed amount of monies outputted through the auxiliary output unit, security may be improved.

While the present invention has been described with respect to the specific embodiments, it will be apparent to those skilled in the art that various changes and modifications may be made without departing from the spirit and scope of the invention as defined in the following claims.

## Claims

1. A casino chip exchange system for exchanging casino chips including RFID tags with information corresponding to value information, the casino chip exchange system comprising:
a counterfeit detection counter configured to count and sum monies inserted by a casino insider and detect the presence of counterfeit money;
a money storage part configured to store monies which have passed through the counterfeit detection counter;
a chip identification part disposed on a casino table to allow a plurality of casino chips to be placed thereon by the casino insider or a player;
a chip identification device including an antenna and an RFID reader and configured to count and sum the plurality of casino chips placed on the chip identification part and detect the presence of counterfeit casino chips;
a control unit connected with the counterfeit detection counter and the chip identification device and configured to check whether a summed amount of monies calculated by the counterfeit detection counter corresponds to a summed amount of casino chips calculated by the chip identification device;
an output unit connected with the control unit and configured to output the summed amount of monies or the summed amount of casino chips to the casino insider; and
an auxiliary output unit connected with the control unit and configured to output the summed amount of monies or the summed amount of casino chips in all directions within 360°.

2. The casino chip exchange system according to claim 1,
wherein the casino chip exchange system further comprises a counterfeit rejection part, and
wherein the money storage part includes a security unit.

3. The casino chip exchange system according to claim 1, wherein the control unit is able to apply information of the summed amount of monies to a central server.

4. The casino chip exchange system according to claim 1, further comprising:
a money dispenser connected with the control unit.

5. The casino chip exchange system according to claim 1, wherein the auxiliary output unit is able to output the summed amount of monies or the summed amount of casino chips further in an upward direction.

6. A pit box positioned around a casino table and including a casino chip exchange system for exchanging casino chips including RFID tags with information corresponding to value information, the casino chip exchange system comprising:
a counterfeit detection counter configured to count and sum monies inserted by a casino insider and detect the presence of counterfeit money;
a money storage part configured to store monies which have passed through the counterfeit detection counter;
a chip identification part disposed on a casino table to allow a plurality of casino chips to be placed thereon by the casino insider or a player;
a chip identification device including an antenna and an RFID reader and configured to count and sum the plurality of casino chips placed on the chip identification part and detect the presence of a counterfeit casino chips;
a control unit connected with the counterfeit detection counter and the chip identification device and configured to check whether a summed amount of monies calculated by the counterfeit detection counter corresponds to a summed amount of casino chips calculated by the chip identification device;
an output unit connected with the control unit and configured to output the summed amount of monies or the summed amount of casino chips to the casino insider; and
an auxiliary output unit connected with the control unit and configured to output the summed amount of monies or the summed amount of casino chips in all directions within 360°,
wherein the counterfeit detection counter, the money storage part and the control unit are disposed in the pit box, and
wherein the money storage part is detachable from the pit box.
